# FASCICULE DE BREVET EUROPEEN

(11) **EP 3 371 047 B1**
(45) Date de publication et mention de la délivrance du brevet: **05.01.2022**
(21) Numéro de dépôt: 16795253.0
(22) Date de dépôt: 02.11.2016
(51) Int. Cl.: B64C 1/14

(54) **PORTE DE SORTIE D'URGENCE D'AVION À MÉCANISMES INTEGRÉS ET PROCÉDÉ D'OUVERTURE/FERMETURE D'UNE TELLE PORTE**
FLUGZEUGNOTAUSGANGSTÜR MIT INTEGRIERTEM MECHANISMUS SOWIE VERFAHREN ZUM ÖFFNEN UND SCHLIESSEN DER TÜR
AIRCRAFT EMERGENCY EXIT DOOR WITH INTEGRATED MECHANISMS AND METHOD FOR OPENINGOSING SAID DOOR

(30) Priorité: 03.11.2015 FR 1560538; 19.02.2016 FR 1600293
(43) Date de publication de la demande: 12.09.2018
(73) Titulaire: Latecoere, 31500 Toulouse (FR)
(72) Inventeur: BESSETTES, Cyrille, 31500 Buzet Sur Tarn (FR); BUCHET, Damien, 31500 Toulouse (FR)
(74) Mandataire: Junca, Eric
(86) Numéro de dépôt international: PCT/EP2016/076324
(87) Numéro de publication internationale: WO 2017/076848

(56) Documents cités:
- EP-A2- 0 876 954
- US-A- 5 031 863
- US-A- 5 305 969
- US-A- 5 337 977

## Description

### DOMAINE TECHNIQUE

L'invention se rapporte à une porte de sortie d'urgence d'avion à mécanismes d'ouverture intégrés, c'est-à-dire concentrés dans un espace réduit de la porte, ainsi qu'à un procédé d'ouverture/fermeture d'une telle porte de sortie d'urgence.

Une porte de sortie d'urgence d'un avion est généralement située au-dessus de la voilure de l'avion dite « porte sur l'aile » (ou « overwing emergency exit door » en terminologie anglaise). En général, un avion est équipé d'une ou deux portes de sortie d'urgence sur l'aile situées sur chaque côté du fuselage. La fonction L'évacuation des passagers en situation d'urgence est la fonction essentielle de cette porte.

De manière générale, la cinématique d'ouverture d'une porte d'avion, par exemple d'une porte passagers ou d'urgence, se décompose en plusieurs étapes qui se succèdent: déverrouillage après libération du verrou par un loquet de sûreté, puis dégagement de la porte de son cadre vers l'intérieur de la cabine par un guidage approprié et ensuite pivotement de la porte par des actionneurs en liaison avec une charnière autour d'un axe de rotation. Pour la fermeture, ces mouvements se succèdent selon une cinématique inverse.

Dans des situations d'urgence, il est recherché de pouvoir déclencher l'ouverture de la porte en un minimum d'opérations dans un minimum de temps tout en sécurisant l'ouverture.

La réglementation demande désormais que les portes d'urgence puissent être écartées sans obstruer les issues de secours. Pour s'y conformer, des portes de sortie d'urgence sur l'aile ont été conçues en reprenant les architectures des portes de type passagers ou de service de cabine, et en appliquant une réduction d'échelle. Ces portes de type cabine passagers, pressurisées dans la cabine et munies de charnières, s'ouvrent automatiquement après l'activation de la poignée interne et d'un bras d'articulation, la porte restant ensuite maintenue ouverte le long du fuselage.

La certification considère ces portes overwing de type passagers comme « dangereuse » au sens de la réglementation - du fait de leur complexité - alors que les portes overwing antérieures (portes sans charnière dites « hatch » sont jetables sur l'aile dès l'ouverture d'urgence) étaient considéraient comme « non dangereuses» car leurs surfaces, supérieures à celle du trou de passage dans le fuselage, génèrent une probabilité d'ouverture en vol très faible. Toutes les fonctions des portes passagers et service sont donc à intégrer dans les portes d'urgence sur ailes et donc sur une surface très réduite, et cela d'autant que la présence d'un grand hublot identique aux hublots du fuselage est désormais également exigée dans les portes d'urgence.

Outre toutes les fonctions d'une porte dite « dangereuse » à intégrer - double sécurité par loquet/verrou lors des phases de verrouillage / déverrouillage, mécanismes d'ouverture / fermeture sécurisés, indicateurs visuels et capteurs de proximité, aide à l'ouverture d'urgence et mécanisme de blocage de pressurisation si la porte n'est pas correctement fermée - un autre paramètre est à prendre en compte: la proximité de certains passagers avec cette porte overwing, ces passagers étant alors soumis aux problèmes thermiques et acoustiques liées à la présence de telles portes. D'où l'importance de garder le maximum de place dans la structure de porte pour y pouvoir installer des patchs acoustiques ou des couvertures thermiques.

### ÉTAT DE LA TECHNIQUE

Il est par exemple connu du document de brevet US 5 031 863, une porte de secours d'avion en appui sur des butées latérales, en mouvement sur des rollers dans des guides et sécurisé par deux loquets situés dans le seuil de la porte. La cinématique générale de la porte est un mouvement vers l'intérieur puis un mouvement de levage du haut de la porte pour contourner les butées. Le bas de la porte est guidé dans des rampes puis la porte s'ouvre automatiquement vers le haut, poussée par des bielles à ressorts de compression. La porte est articulée par une charnière composée de deux bras en col de cygne en partie haute. Le levage de la porte est généré par une came liée à la poignée en partie en haute. Une poignée intérieure est agencée au dessus du hublot et est activée dans un mouvement du haut vers le bas.

Cette porte ne réalise pas toutes les fonctions d'une porte de type « dangereuse » selon la réglementation: la double sécurisation des phases de verrouillage / déverrouillage, et le blocage de pressurisation ne sont pas prévus. De plus, cette porte ne peut être fermée que de l'intérieur et le mécanisme de verrouillage est réduit à un crochet en bas de porte

Le document de brevet US 5 931 415 se rapporte à une porte de type à ouverture automatique et préconise une cinématique ouverture vers l'intérieur couplée à une descente pour contourner les butées. Le guidage est réalisé par des appuis dans des rampes pour imprimer la cinématique d'ouverture au haut de la porte, alors que le bas de porte suit un mouvement vers le bas puis vers l'extérieur. La porte est maintenue en position ouverte grâce à un loquet qui s'engage automatiquement à l'ouverture. De plus, la poignée extérieure est liée à l'arbre du loquet alors que la poignée intérieure est articulée par rapport à cet ensemble.

En outre, cette porte ne comporte pas de système empêchant de pressuriser si la porte n'est pas complétement fermée (critère de porte « non dangereuse » au sens de la réglementation). Le panneau d'aération de ce mécanisme est utilisé comme « pressure lock » (loquet de blocage en pression) afin d'empêcher l'ouverture de la porte en cas de vol faiblement pressurisé. Par ailleurs cette porte ne possède pas de système de sécurité si l'un des verrous venaient à casser. Enfin, la cinématique de cette porte est complexe et les fonctions de sécurisation ne sont pas remplies.

Par ailleurs, la porte du document de brevet WO 2013128219 est articulée par le haut par l'intermédiaire d'un bras et d'un ensemble de biellettes soulevées par un actionneur à gaz. Le point d'articulation à charnière virtuelle est à l'extérieur du fuselage. La porte s'ouvre après un mouvement de faible amplitude vers l'intérieur puis vers le haut pour contourner les butées. La poignée intérieure a un axe horizontal, est située au-dessus du hublot et fonctionne du haut vers le bas. Elle permet d'ouvrir en mode d'urgence (toboggan armé) et en mode de maintenance (toboggan désarmé).

Outre la cinématique particulière à centre de rotation instantanée située à l'extérieur de la porte, ce montage ne remplit pas les conditions sécuritaires en terme de double sécurisation au verrouillage et au déverrouillage, et de mécanisme de blocage de pressurisation (car la classification de cette porte au sens de la règlementation est « non dangereuse »).

L'état de l'art est également illustré par le document US-A1-5 337 977, divulguant une porte d'aéronef munie d'un volet d'évent.

### EXPOSÉ DE L'INVENTION

L'invention vise à répondre aux principales conditions que doivent remplir les portes dites « dangereuses » dans la réglementation, à savoir une double sécurité au verrouillage et au déverrouillage, ainsi que des mécanismes d'ouverture / fermeture sécurisés, une aide à l'ouverture d'urgence et un mécanisme de blocage de pressurisation en cas de fermeture incorrecte de la porte. De plus, la présente invention vise à prévoir des mécanismes fonctionnels regroupés pour permettre une combinaison de ces fonctions dans un espace réduit - c'et-à-dire sur une porte de sortie d'urgence munie d'un hublot de taille standard - et faciliter la cinématique d'ouverture / fermeture de la porte.

Pour ce faire, l'invention prévoit de concentrer les mécanismes d'ouverture d'un volet d'évent d'un premier mouvement d'ouverture de porte overwing, de blocage / verrouillage de cette porte, d'un second mouvement d'ouverture de la porte puis de sa rotation à partir de la seule manipulation de la poignée interne, tout en développant une cinématique adaptée à la concentration de mécanismes ainsi intégrés.

A ce titre, la présente invention a pour objet une porte de sortie d'urgence d'avion selon la revendication 1, à mécanismes d'ouverture intégrés par regroupement. Ce regroupement de mécanismes d'ouverture de la porte est réalisé dans un bandeau de regroupement situé d'un côté d'un hublot de dimension standard, c'est-à-dire semblable aux autres hublots de cet avion. Dans un tel bandeau, le regroupement comporte une poignée interne d'ouverture de porte montée sur un arbre principal en liaison avec un arbre de verrouillage sur lequel est monté un mécanisme de blocage/verrouillage de porte à loquet et verrou. Au moins un mécanisme d'ouverture conditionnelle de la porte comporte un volet d'évent agencé dans la porte et présentant des bords inférieur et supérieur, une connexion à pivot agencée dans la porte pour coupler le volet d'évent à la poignée interne, et des ressorts de rappel du volet en position fermée pour permettre une ouverture dudit volet en exerçant une pression réduite dans des conditions de variation de pression, c'est-à-dire dans les conditions standard avec une variation de pression résiduelle entre l'intérieur et l'extérieur de l'avion proche de zéro (par exemple inférieure à 0,069 bar (1 psi)). Un arbre de blocage présente, à chaque extrémité, un levier de pression équipé de premier et deuxième galets de blocage et de déblocage du volet, ainsi qu'une came de déblocage fixée sur l'arbre principal. Dans des conditions de variation résiduelle de pression entre l'intérieur et l'extérieur de pression, le volet d'évent étant apte à pivoter autour de son bord inférieur par rétractation des ressorts, la came se déplace avec la poignée interne pour engager le galet de déblocage du volet et pousser ce galet de déblocage de sorte à forcer la rotation de l'arbre de blocage pour décoller le galet de blocage d'une butée de porte et libérer le volet d'évent. Dans des conditions de surpression, ladite came n'engage pas le galet de déblocage et le galet de blocage vient au contact de la butée, empêchant ainsi l'ouverture dudit volet.

Dans les conditions standard, la variation entre lesdites pressions interne et de l'avion est résiduelle, typiquement inférieure à 0,069 bar (1 psi) et les conditions de surpression ou de pressurisation règnent en particulier lorsque l'avion atteint une certaine altitude, avec typiquement une variation de pression supérieure à 0,138 bar (2 psi).

Dans un mode de réalisation préféré, la butée est fixée sur une ferrure de porte. Dans les conditions de variation de pression résiduelle, les leviers de pression et le volet sont aptes à se déplacer conjointement par actionnement de la poignée interne et permettre au volet de s'ouvrir. Dans les conditions de surpression, le volet reste sur la porte, et les premiers galets viennent alors en contact des butées pour bloquer le volet.

Dans ces conditions de surpression, l'arbre de blocage est alors apte à tourner lorsqu'on soulève la poignée interne et, les deuxièmes galets roulant sous chaque came, les premiers galets viennent en contact des butées pour bloquer le volet.

Le mécanisme à leviers de pression permet au système d'empêcher l'ouverture du volet et de la porte, ce qui sécurise le vol. Ainsi lorsqu'une surpression persiste (à partir d'une certaine altitude de l'avion), les passagers ne peuvent pas ouvrir la porte de sortie d'urgence.

Selon des caractéristiques avantageuses:
- un bouton de trappe est aménagé sur une face externe du volet d'évent pour actionner une came d'ouverture, désengager les leviers de pression et permettre ainsi l'ouverture de la porte à partir de l'extérieur de l'avion;
- les appuis sont des galets;
- les ressorts sont en principe tarés à sensiblement 1 psi, mais leur raideur peut être adaptée en fonction des stratégies des avionneurs.

Dans un mode de réalisation avantageux, le mécanisme de blocage/verrouillage comporte un loquet de blocage pour chaque verrou. Chaque verrou est monté directement contre une charnière de pivotement et de maintien de la porte en position ouverte, un tel montage permettant de bloquer tout déplacement de la porte en azimut relatif de l'avion.

Ce montage permet d'éviter le positionnement conventionnel des verrous sur les bords de la porte avec une contre-ferrure de chaque verrou sur l'encadrement de porte.

Avantageusement, le mécanisme de verrouillage / déverrouillage (pour une porte « dangereuse » au sens de la réglementation) est formé d'un ensemble de loquet et contre-loquet de blocage combiné à chaque verrou. Dans chaque ensemble, le contre-loquet et le verrou, montés sur un même arbre de verrouillage, forment une seule pièce. Plus particulièrement:
- le loquet est configuré pour envelopper le verrou et le maintenir en place lorsque le mécanisme de verrouillage se rompt afin de conserver la porte dans un état sécurisé;
- le contre-loquet est configuré pour former une avancée à l'intérieur du loquet, ce qui permet de réaliser une butée dès qu'une rupture du mécanisme de verrouillage se produit.

Dans un autre mode de réalisation avantageux, un mécanisme de rupture de glace est également intégré dans le bandeau de regroupement des mécanismes. Ce mécanisme de rupture de glace comporte à chaque extrémité du bandeau une came de rupture montée sur l'arbre principal. Chaque came est guidée par une rampe de pivotement en liaison avec un ressort de rappel pour générer, par l'actionnement de l'arbre de verrouillage par la poignée interne, une séquence d'ouverture de porte d'amplitude minimale vers l'intérieur de la cabine passagers et briser une épaisseur de glace déterminée, par exemple une épaisseur standard de 2,5 mm, sur une peau externe de la porte. Ce premier déplacement de porte est destiné à décoller/briser la glace dans le cas où une couche de glace ou de givre recouvre le fuselage.

Dans ces conditions, ce mécanisme de rupture de glace est indépendant des mécanismes de verrouillage / déverrouillage des ensembles de loquets et verrous car il est initiée directement en actionnant l'arbre principal depuis la poignée interne.

De préférence le bandeau de regroupement des mécanismes d'ouverture de porte s'étend horizontalement au-dessus du hublot, la porte étant apte à s'ouvrir par pivotement selon un axe horizontal coïncidant sensiblement avec un bord supérieur de la porte d'urgence. Le volet est disposé au niveau du bandeau et/ou déporté sous le hublot en liaison avec des bielles de couplage reliant l'arbre principal et l'arbre de blocage du volet.

L'invention a également pour objet un procédé d'ouverture/fermeture d'une telle porte de sortie d'urgence d'avion située sur aile d'avion pour permettre une évacuation de la cabine passagers, la cinématique de fermeture de la porte reprenant les étapes d'ouverture ci-dessous en ordre inverse. Le procédé consiste à effectuer une cinématique d'ouverture de porte agencée dans un encadrement du fuselage de l'avion, à partir d'un état initial de porte en position fermée de profil aligné avec le fuselage, selon la suite d'étapes suivantes générées successivement par une unique action exercée sur une poignée interne dans une séquence de pivotement autour d'un arbre principal :
- une première étape d'ouverture d'un volet d'évent du mécanisme d'ouverture conditionnelle lorsque une variation de pression entre la cabine et l'extérieur de l'avion est inférieure à une valeur résiduelle déterminée;
- une étape de déblocage/déverrouillage par activation d'un mouvement des loquets pour débloquer les verrous et rétracter ces verrous débloqués afin de finaliser le déverrouillage par libération de l'arbre principal;
- une étape d'ouverture de porte par rotation de l'arbre principal entraînant un mouvement de basculement de la porte vers l'intérieur de la cabine;
- une étape de translation sensiblement parallèlement au fuselage, en liaison avec un guidage dans l'encadrement de porte et un contournement des butées de fuselage, et
- une étape de pivotement de la porte entraînée autour d'un axe de rotation de charnières et aidée dans cette rotation par des actionneurs agencés latéralement.

De préférence, l'étape de translation de la porte est une étape de descente facilitée par son propre poids.

Selon des caractéristiques fonctionnelles préférées :
- une condition de surpression entre l'intérieur et l'extérieur de l'avion, supérieure à une valeur seuil donnée, bloque le mécanisme d'ouverture conditionnelle au cours de sa mise en œuvre pour empêcher l'ouverture du volet d'évent lors de la première étape;
- une étape préliminaire d'ouverture de la porte vers l'intérieur de la cabine avec une amplitude minimale est générée par une amorce de rotation de cames montées sur l'arbre principal en liaison avec un levier et un ressort de rappel, cette étape étant réalisée après l'étape de déblocage / déverrouillage;
- l'amorce de rotation préliminaire, destinée à la rupture de la glace, est effectuée par un aller-retour de rotation / contre-rotation suivant une configuration adaptée des cames.

### PRÉSENTATION DES FIGURES

D'autres données, caractéristiques et avantages de la présente invention apparaîtront à la lecture qui suit et qui détaille des réalisations de l'invention données uniquement à titre d'exemples non limitatifs. Ces réalisations détaillées sont accompagnées de figures pour une meilleure visualisation et compréhension des combinaisons de moyens mis en œuvre, ces figures représentant respectivement:
- les figures 1 et 2, des vues en perspective et latérale du mécanisme d'ouverture conditionnelle, avec un découpage du volet de porte pour une meilleure visibilité sur la vue latérale (figure 2);
- la figure 3, une vue en coupe latérale du mécanisme d'ouverture conditionnelle illustrant le mouvement d'ouverture du volet de porte;
- la figure 4, une vue latérale plus détaillée que la figure 4, se rapportant au déblocage du mécanisme d'ouverture conditionnelle;
- les figures 5a à 5f, des vues latérales en coupe du mécanisme d'ouverture, se rapportant à des séquences essentielles d'ouverture du volet d'évent dans les conditions normales de pression;
- les figures 6a à 6c, des vues latérales en coupe du mécanisme d'ouverture illustrant une séquence d'ouverture du volet d'évent lorsque la face externe de structure de porte est recouverte d'une couche de glace;
- les figures 7a à 7c, des vues latérales en coupe du mécanisme d'ouverture illustrant une séquence de blocage d'ouverture du volet d'évent;
- les figures 8a et 8b, une vue frontale et une vue agrandie du bandeau de porte intégrant les mécanismes d'ouverture et en particulier le mécanisme de blocage/verrouillage;
- les figures 9a et 9b, des vues en coupe et en perspective du mécanisme de blocage/verrouillage;
- les figures 10a à 10f, des vues latérales en coupe du mécanisme de rupture, illustrant six instants successifs de la séquence de déplacement en « aller/retour» de la porte;
- la figure 11, une vue latérale des guides d'encadrement de fuselage 200 des galets supérieurs de la porte et les butées de l'encadrement fuselage;
- les figures 12a et 12b, des vues globales en perspective interne et externe d'une porte de sortie d'urgence selon l'invention ; et
- les figures 13a et 13b, une frontale d'une porte de sortie d'urgence avec, respectivement, un volet d'évent déporté sous le hublot et deux volets d'évent l'un étant agencé au-dessus et l'autre déporté sous le hublot.

### DESCRIPTION DETAILLÉE

Dans le présent texte, les qualificatifs de localisation « supérieur », « inférieur », « au-dessus » et « sous » se rapportent à des configurations de localisation standard d'éléments d'un avion au sol ou en vol de croisière. Le qualificatif « latéral » se réfère à un plan perpendiculaire au fuselage d'un avion.

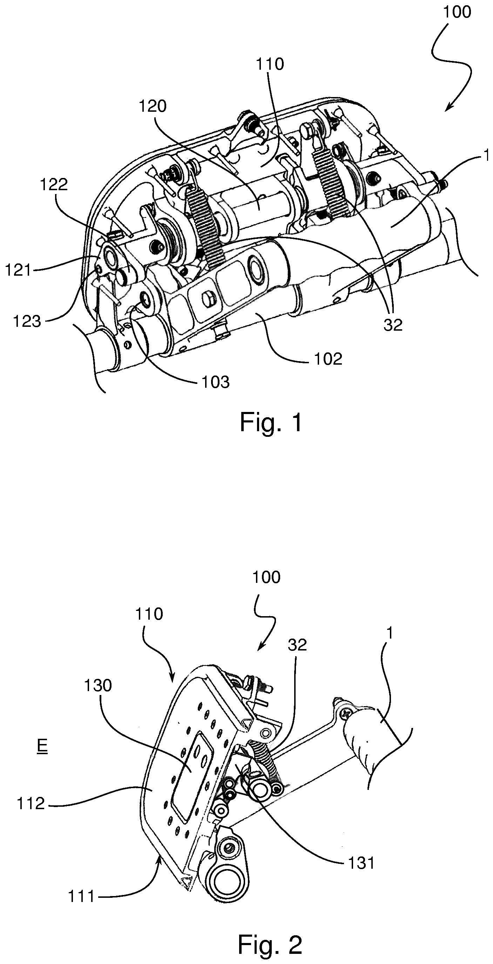

Le mécanisme d'ouverture conditionnelle 100 à volet d'évent 110, tel qu'illustré sur les vues en perspective de la figure 1 et de la figure 2, respectivement de l'intérieur et de l'extérieur de l'avion (le volet étant découpé sur la figure 2 pour une meilleur visibilité), combine le volet d'évent agencé dans la porte 10 et une poignée interne 1 articulée sur un arbre principal 102: le volet 110 pour empêcher la pressurisation (en cas de fermeture de porte incorrecte), une manipulation de la poignée 1, une limitation d'ouverture de porte dans les conditions pressurisées standard et une ouverture de porte dans des conditions perturbées, en particulier par la glace ou le givre. Ce mécanisme 100 est également utilisé pour empêcher l'ouverture de porte à partir de l'intérieur de la cabine dans des conditions de pressurisation supérieures au standard. Même dans le cas de pression externe - par exemple lors d'une descente rapide de l'avion ou d'efforts aérodynamiques négatifs tendant à exercer une pression sur la face externe du volet située à l'extérieur de l'avion - le mécanisme d'ouverture conditionnelle 100 ne se déverrouille ni ne se déloque grâce au mécanisme de blocage/verrouillage décrit ci-dessous.

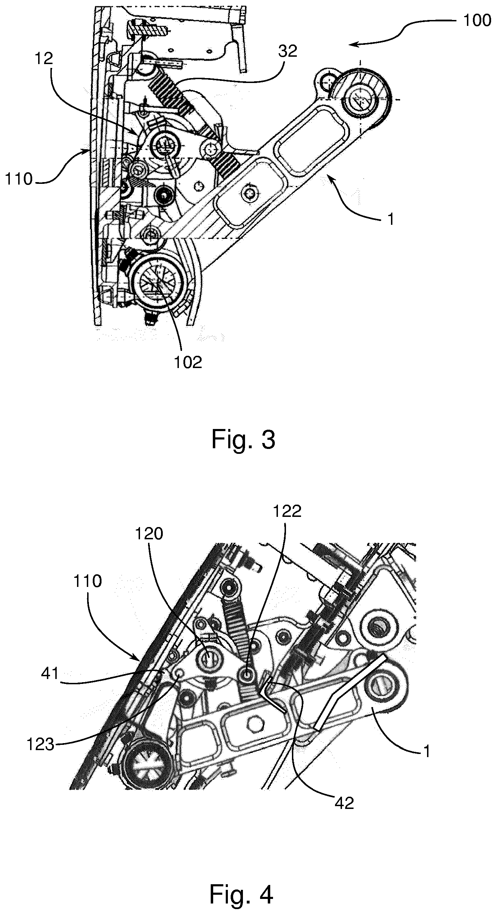

Le mécanisme d'ouverture conditionnelle 100 illustré en figure 1 se compose du volet d'évent 110, couplé à l'arbre principal 102 de la poignée 1 par des bielles excentrées 103 en montage antagoniste de ressorts de rappel 32, et d'une connexion à pivot 12 (cf. figure 3) composée d'un arbre de blocage 120 solidaire du volet 110 et sur lequel sont montés des leviers de pression 121. Chaque levier de pression 121 comporte en leurs deux extrémités un galet de blocage 122 et un galet de déblocage 123.

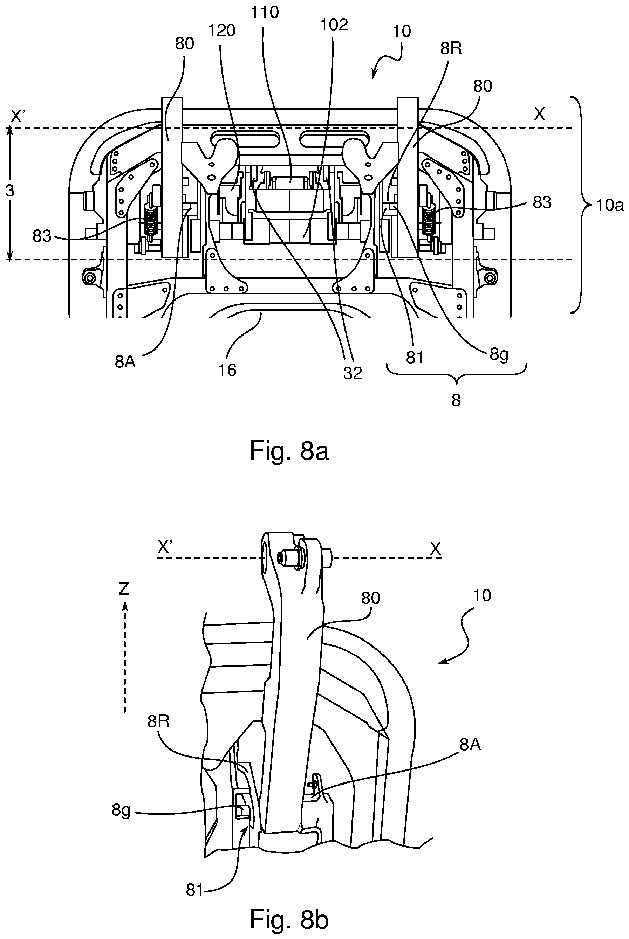

Si les loquets de blocage du mécanisme de blocage / verrouillage ne sont pas en position pour bloquer les verrous (voir ci-après la description du mécanisme de blocage/verrouillage en référence aux figures 8a et 8b, le volet d'évent 110 ne peut pas se fermer et la cabine d'avion ne peut donc pas être pressurisée.

En cas de tentative d'ouverture de la porte sous condition de pression dans la cabine supérieure à un seuil donné par exemple 0,138 bar (2 psi), le mécanisme d'ouverture leel 100 exerce une fonction de blocage/déblocage par les leviers de pression 121 et la porte ne s'ouvre pas. En cas de variation négative de pression - la pression de cabine étant alors inférieure à la pression extérieure à l'avion -, les galets de blocage 122 des leviers de pression 121 viennent en butée et empêchent l'ouverture du volet d'évent 110.

En cas d'ouverture préliminaire de porte pour dégivrage ou rupture de glace déposée sur la porte, le bord inférieur 111 (cf. figure 2) du volet d'évent 110 est poussée vers l'intérieur de la cabine par les arbres excentrés 103. Avantageusement, ce mécanisme d'ouverture 100 évite toute interférence mécanique.

Pour ouvrir le volet 110 à partir de l'extérieur de l'avion « E », une pression sur un bouton d'ouverture externe 130, aménagé sur la face externe 112 du volet 110, actionne une came d'ouverture 131 (cf. figure 2) pour désengager les leviers de pression 121 (cf. figure 1). Ainsi, le mécanisme d'ouverture 100 est débloqué par le bouton externe 130 - qui n'est pas sensible aux conditions de pression - grâce au mouvement « retardé » induit entre le bouton externe 130 et la poignée interne 1. Ce mouvement retardé est également utilisé pour une ouverture dans des conditions d'interférence, par exemple pour rompre la glace.

Le mouvement retardé est illustré plus particulièrement sur la vue en coupe latérale du mécanisme d'ouverture 100 de la figure 3. La poignée interne 1 étant directement montée sur l'arbre principal 102, le volet d'évent 110 est lié à la poignée 1 via la connexion à pivot 12, et les deux ressorts 32 de rappel qui tendent à maintenir le contact. Dans les conditions nominales (c'est-à-dire sans pression sur le volet 110 et sans glace sur l'extérieur de la porte), le volet 110 et la poignée 1 se déplacent conjointement, le contact étant assuré par les ressorts 32. Un retard de mouvement entre la poignée 1 et le volet 110 se produit si une force supérieure à la force de rappel des ressorts 32 est appliquée sur le volet.

En référence à la vue latérale plus détaillée de la figure 4, qui se rapporte au déblocage du mécanisme d'ouverture conditionnelle 100 à chaque extrémité par une came de déblocage 41 qui désengage le galet de déblocage 123 du volet 110.

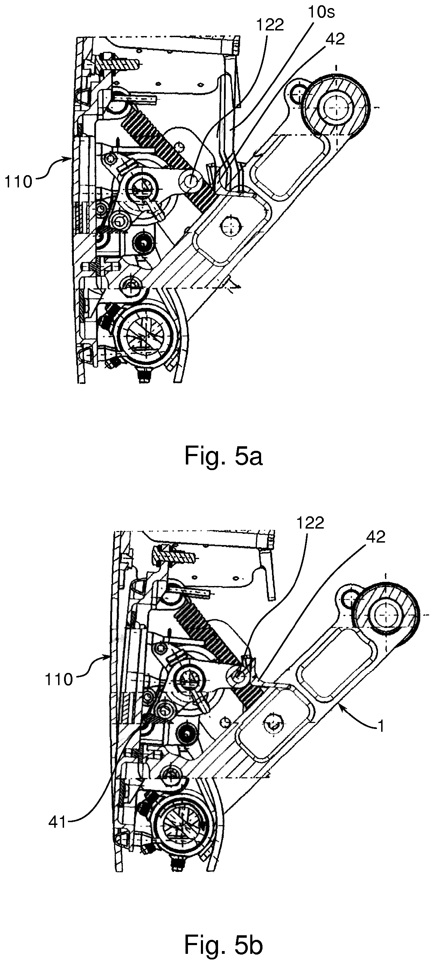

La came de déblocage 41, fixée sur l'arbre principal 102 se déplace avec la poignée 1. Dans les conditions nominales, lorsque la porte est ouverte de l'intérieur, chaque galet de blocage 122 vient dans un premier temps, en contact avec une butée 42 fixée sur une ferrure latérale de porte 10s (cf. figure 5a). Dans un deuxième temps, la came de déblocage 41 pousse le galet de déblocage 123 et force la rotation de l'arbre de blocage 120. Le galet de blocage 122 décolle de la butée et le volet d'évent 110 est libéré pour poursuivre son ouverture. En d'autres termes, le contact des galets de blocage 123 sur les butées 42 permet aux galets de déblocage 122 de rouler sous les cames 41 et de s'en dégager, ce qui libère l'ouverture du volet 110.

Dans des conditions de surpression, avec une variation supérieure à 0,138 bar (2 psi) dans l'exemple, le volet 110 ne peut pas s'ouvrir: l'arbre de blocage 120 tourne lorsqu'on soulève la poignée interne 1, les galets de déblocage 123 roulent sous la came 41 et le volet 110 reste bloqué. En effet, avant que les galets de déblocage 123 ne se dégagent des cames, les premiers galets de blocage 122 viennent en contact des butées 42 et bloquent le mécanisme 100: le volet 110 ne peut pas s'ouvrir.

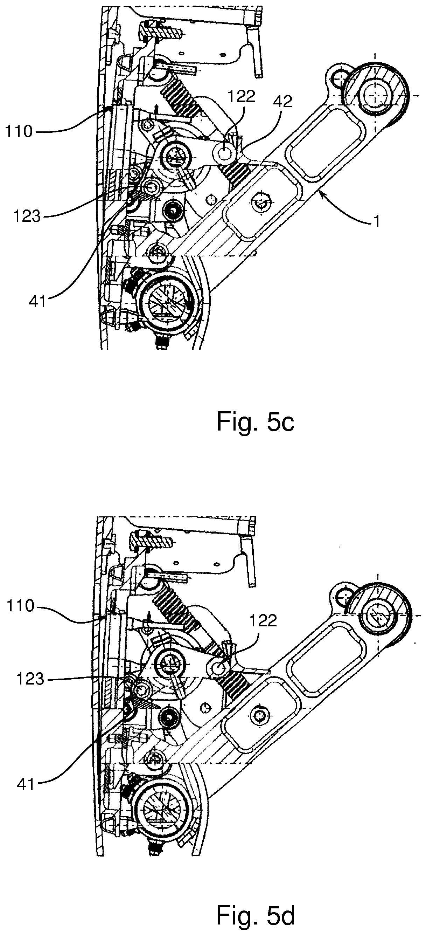

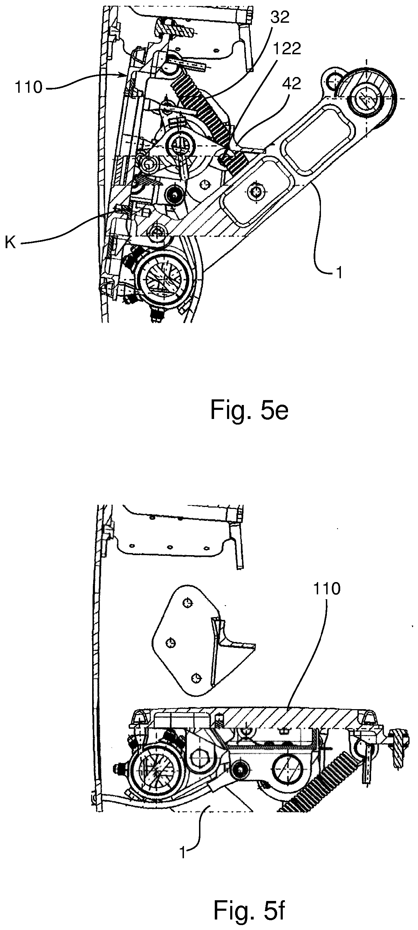

Les vues latérales en coupe du mécanisme d'ouverture 100 des figures 5a à 5f se rapportent aux séquences essentielles d'ouverture du volet d'évent 110 dans les conditions normales (c'est-à-dire résiduelles) de pression par abaissement de la poignée 1: le volet d'évent 110 est d'abord en position fermée avec le galet de blocage 122 à distance de la butée 42 (figure 5a); puis le galet de déblocage 123 du volet d'évent 110 vient en contact avec la came 41 (figure 5b); le galet de blocage 122 vient alors en contact avec la butée 42, entraînant une perte de contact entre la poignée 1 et le volet 110 (figure 5c); le déblocage du volet d'évent 110 est ensuite réalisé par l'avancée du galet de déblocage 123 sur la came de déblocage 41 (figure 5d), suivi d'une rotation du volet d'évent 110 par rétractation des ressorts 32 après sortie du galet de blocage 122 de la butée 42 et d'un contact « K » entre la poignée 1 et le volet 110 (figure 5e); et le volet d'évent 110 libéré finit en position totalement ouverte lorsque la poignée interne 1 est entièrement abaissée (Figure 5f).

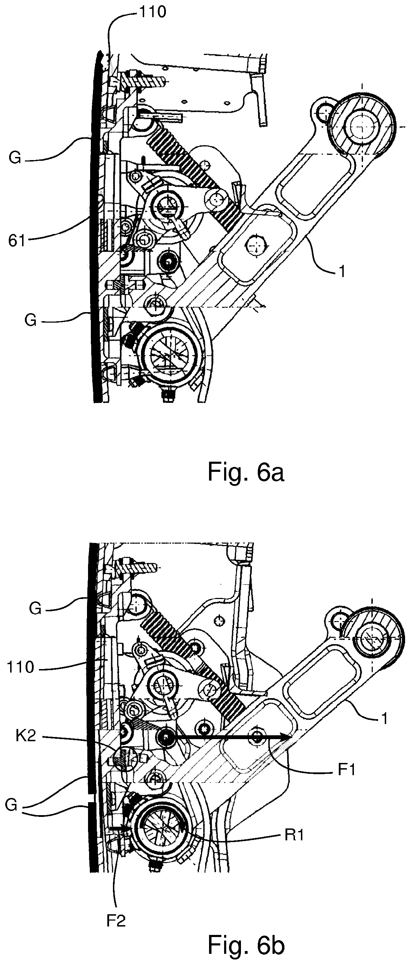

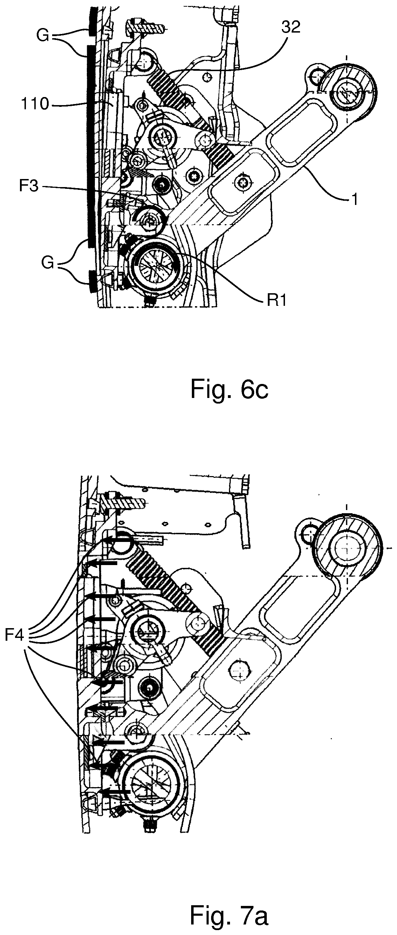

Les vues latérales en coupe des figures 6a à 6c illustrent une séquence d'ouverture du volet d'évent 110 lorsque la face externe de structure de porte 61 est recouverte d'une couche de glace « G » qui gêne l'ouverture dudit volet : le volet d'évent 110 est d'abord en position fermée (figure 6a); puis le volet 110 tourne par rapport à la poignée 1 (en rotation R1) avec: une perte de contact dans la zone K2 entre la poignée 1 et le volet 110, un déplacement du volet (flèche F1) et une traction induite du volet 110 (flèche F2) (figure 6b). La glace « G » est alors brisée sur le pourtour du volet 110, la cassure de glace commençant au bas du volet 110 grâce à la traction induite (flèche F2) et se répercutant sur le reste du volet 110 pour le libérer complètement. Les ressorts 32 rappellent alors le volet 110 qui tourne (flèche F3) pour revenir en contact avec la poignée 1 (figure 6c).

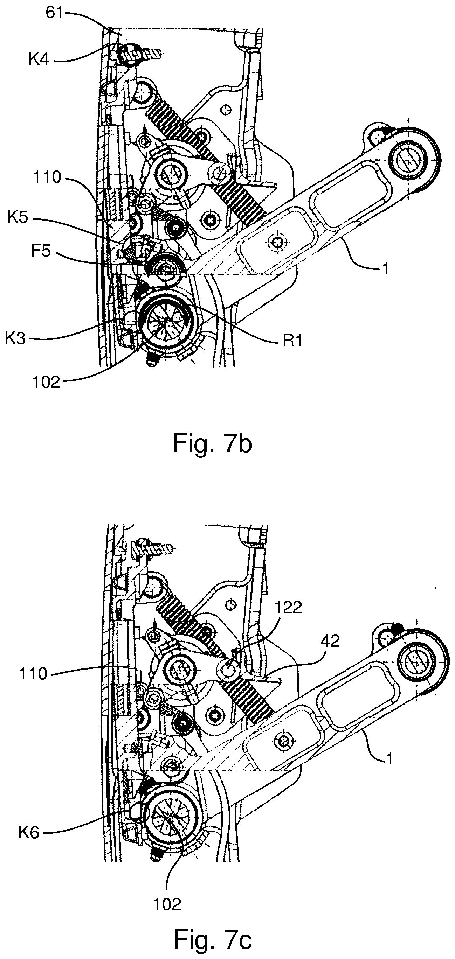

Une séquence de blocage d'ouverture du volet d'évent 110 est illustrée par les vues latérales des figures 7a à 7c dans le cas de surpression, 0,138 bar (2 psi) dans l'exemple, de la cabine par rapport à l'extérieur de l'avion: le volet d'évent est fermé avec une surpression de la cabine symbolisée par les flèches F4 (figure 7a); puis (figure 7b) le volet d'évent 110 est entraînée en rotation (flèche F5) jusqu'à prendre contact dans la zone K3 avec l'arbre de rotation 102 de la poignée 1 actionnée en rotation (flèche R1). Le volet d'évent 110 est maintenu par la surpression (flèches F4) en contact avec la structure de porte 61 dans la zone K4 du bord supérieur du volet 110, alors qu'une perte de contact K5 se produit entre la poignée 1 et le volet 110 avec un contact entre l'arbre 102 de rotation de la poignée 1 et le volet d'évent 110 (figure 7b). Le galet de blocage 122 vient en appui sur la butée 42 et la mise en contact s'établit dans la zone K6 entre l'arbre 102 de la poignée 1 et le volet d'évent 110 (figure 7c).

Plus spécifiquement, les mécanismes fonctionnels d'ouverture conditionnelle, décrits ci-dessus, d'ouverture de porte proprement dit et de verrouillage/déverrouillage, décrits ci-dessous, sont regroupés dans un bandeau 3 de porte de sortie d'urgence selon l'invention dont un exemple est illustré par la figure 8a. Cette figure 8a montre un panneau de porte de sortie d'urgence d'avion selon l'invention en vue frontale partielle depuis l'intérieur de la cabine. Seule la partie supérieure 10a située au-dessus du hublot 16 de la porte 10 apparaît sur cette figure. Un exemple de bandeau de porte 3 s'étend dans l'espace réduit de cette partie supérieure 10a.

Le mécanisme d'ouverture de porte comporte deux charnières 80, qui ont classiquement la fonction de permettre le pivotement autour d'un axe X'X dans l'encadrement de porte et le maintien de la porte 10 jusqu'à sa position ouverte. Il comporte également un mécanisme de connexion dit de blocage/verrouillage 8 entre chaque charnière 80 et un verrou 81 qui comporte des moyens dupliqués de chaque côté du bandeau 3 sur des arbres de verrouillage 8A, en particulier un verrou 81 muni d'un galet 8g circulant sur une rampe de guidage 8R. L'objectif de ces connexions est de maintenir la porte verrouillée, en particulier en azimut avion en vol, quelles que soient les contraintes: défaut singulier du mécanisme, interférence mécanique dans l'environnement, charges tendant à déverrouiller, etc.

Comme cela apparaît sur l'agrandissement de la figure 8b, l'arbre de verrouillage 8A est monté en partie inférieure de chaque charnière 80 et chaque verrou 81, muni du galet 8g mené sur la rampe de guidage 8R, est monté sur l'arbre de verrouillage 8A de sorte que le verrou 81 est directement connecté à la charnière 80 correspondante. Un déplacement de la porte en azimut « Z avion » amène le verrou 81 en contact avec la rampe de guidage de verrou 8R et tend à ne pas déverrouiller le mécanisme (c'est-à-dire le mécanisme « sur-verrouille »). Les verrous 81 montés sur les charnières 80 empêchent également la porte de bouger en Z avion.

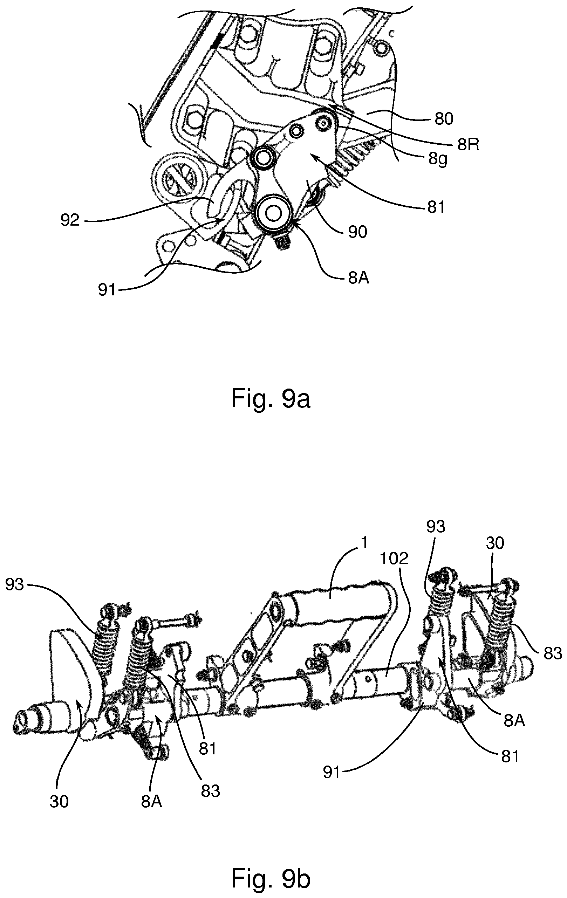

Le mécanisme d'ouverture de porte n'est activable que lorsque le mécanisme de verrouillage / déverrouillage l'autorise. Ce mécanisme de verrouillage/déverrouillage 8 est plus précisément illustré par la vue en coupe latérale de la figure 9a. Ce mécanisme comporte, pour chaque charnière 80, un système de loquet de blocage 91 et de contre-loquet 92 combiné au verrou 81 sur sa rampe de guidage 8R.

La vue en perspective de la figure 9b montre, plus globalement, les mécanismes d'ouverture de porte et de verrouillage/déverrouillage montés sur l'arbre principal 102 de rotation de la poignée 1, ainsi que des cames de rupture 30 disposées aux extrémités de l'arbre 102 et destinées à la phase d'ouverture préliminaire pour la rupture de glace. La fonction du verrou 81 est de conserver la porte fermée quelles que soient les conditions de vol (accélérations, turbulences, dépression, etc.). La fonction du loquet de blocage 91 est de garder la porte sécurisée par verrouillage si un défaut apparaît dans le mécanisme de verrouillage/déverrouillage. Ainsi, la fonction du contre-loquet 92 est garder le verrou 81 en place en maintenant le loquet 91 et en créant un moment positif qui tend à sur-bloquer le système, et donc à empêcher l'entraînement inverse du mécanisme.

Avantageusement, le contre-loquet 92 et le verrou 81 forment une même pièce 90 tout en réalisant chacun les mêmes fonctions que lorsque le contre-loquet et le verrou sont séparés, comme dans les architectures antérieures. Le loquet 91 et le contre-loquet 92 sont de forme circulaire. Le contre-loquet 92 vient dans le loquet 91 pour garantir une butée à l'intérieur de sa face interne dès qu'une rupture du mécanisme de verrouillage se produit. Si la butée se produit, le loquet tend à sur-bloquer. Des bielles à ressorts de compression 83 de verrouillage et 93 de blocage sont présents pour sécuriser respectivement les verrous 81 et les loquets 91 par l'exercice d'une force de rappel.

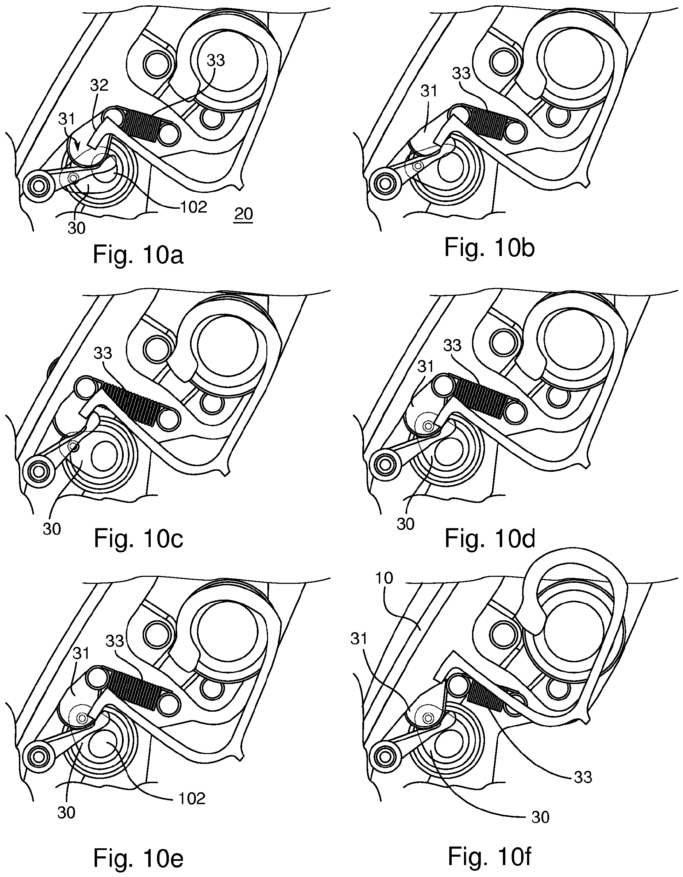

Afin de bien visualiser l'étape préliminaire d'ouverture de porte par le mécanisme de rupture, les vues latérales en coupe des figures 10a à 10f montrent six instants successifs de la séquence de déplacement préliminaire en « aller/retour» de la porte 10 vers l'intérieur de la cabine 20 avec une amplitude minimale. Cette étape est réalisée par une amorce de rotation des cames de rupture 30 montées sur l'arbre principal 102, chacune étant guidée sur un levier de rupture 31 servant de rampe de pivotement. Chaque levier de rupture 31 est monté en une extrémité 32 d'un ressort de rappel 33. Les cames 30, les leviers 31 et les ressorts 32 forment un mécanisme de rupture de glace dans le cas où de la glace ou du givre s'est déposé sur le fuselage de l'avion au niveau de la structure externe de porte 61 (cf. figures 6a à 6c). La porte 10 se déplace d'abord vers l'intérieur de la cabine depuis sa position initiale fermée, ce qui provoque la rupture de la glace.

Cette étape préliminaire permet donc de réaliser un cassage de glace, typiquement une épaisseur de glace de 2,5 mm sur la structure externe de porte 61. Cette étape est réalisée après l'étape d'ouverture du volet d'évent 110, juste après le déblocage des charnières 81.

Avantageusement, la présente architecture est indépendante des séquences de déverrouillage de loquet-verrou et initiée directement en actionnant l'arbre des verrous depuis la poignée interne 1, contrairement aux architectures antérieures dans lesquelles les mouvements de porte pour casser la glace sont déterminés par les mouvements et la cinématique des verrous.

A la fin de la séquence (cf. figure 10f), après déblocage/déverrouillage par le mécanisme de systèmes de loquets 91 /contre-loquets 92 /verrous 81 (cf. figure 9a), et la libération des cames de rupture 30 des leviers de rupture 31 associés, commence le mouvement de descente de la porte.

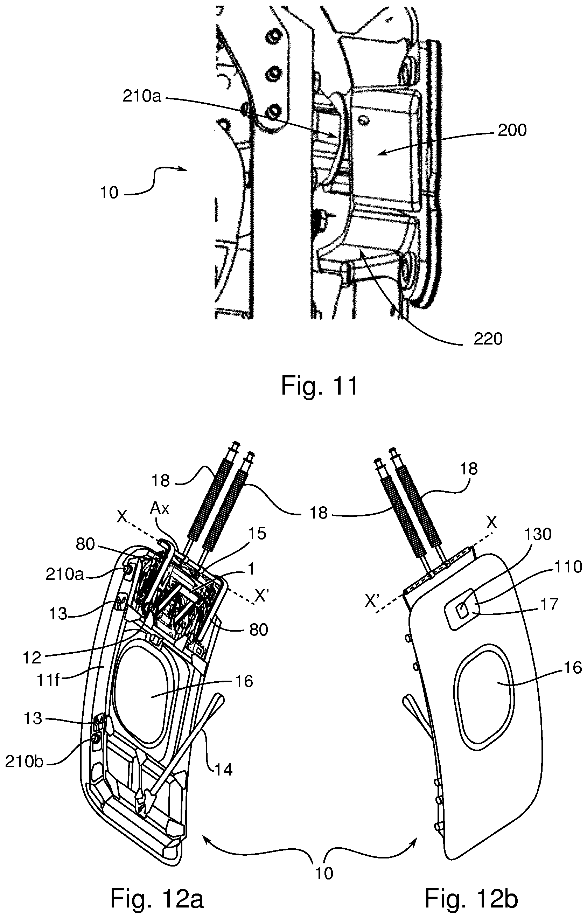

La figure 11 illustre les guides d'encadrement de fuselage 200 pour des galets supérieurs 210a de la porte 10 lors de la descente de la porte, et le contournement des butées 220 de l'encadrement fuselage. Les galets 210a venant des faces latérales de la porte 10 circulent dans les rampes de guidage 200 formées dans l'encadrement du fuselage et la porte 10 arrive en position basse par un contournement des butées inférieures de fuselage 220.

Les figures 12a et 12b illustrent une présentation globale de la porte de sortie d'urgence 10, respectivement en vues perspectives interne et externe. La porte 10 en position basse est positionnée pour pivoter par un entraînement rotatif autour de l'axe X'X de rotation des charnières 80. Deux actionneurs 18, montés latéralement sur le même arbre Ax que les charnières 80, facilitent cette rotation. Ces figures font également apparaitre les galets de guidage de porte supérieur 210a, les butées de porte 13 sur les flancs latéraux 11f, un détecteur de verrouillage / blocage 12, une courroie de prise manuelle 14, avantageusement un système de blocage de porte en vol de sécurité appelé « flight lock » 15 (pour les cas faiblement sécurisés entre 0 bar (0 psi) et la pression utilisée pour le tarage des ressorts, autour de 0,069 bar (1 psi) dans l'exemple), l'hublot 16 (de même dimension que les autres hublots passager du fuselage de l'avion), et le volet d'évent 110 formant une poignée externe 17 avec le bouton d'ouverture de porte 130 depuis l'extérieur.

L'invention n'est pas limitée aux exemples de réalisation décrits et représentés.

L'invention concerne une combinaison multifonctionnelle de mécanismes d'ouverture intégrés avec une connexion au volet 110. Cette connexion peut-être soit directe, si le volet est placé sous la poignée interne 1 comme illustré par exemple par les figures 1 ou 2, soit adaptée à une position déportée du volet 110 du fait des dimensions de ce volet (en fonction des valeurs de pressurisation) et de la place disponible.

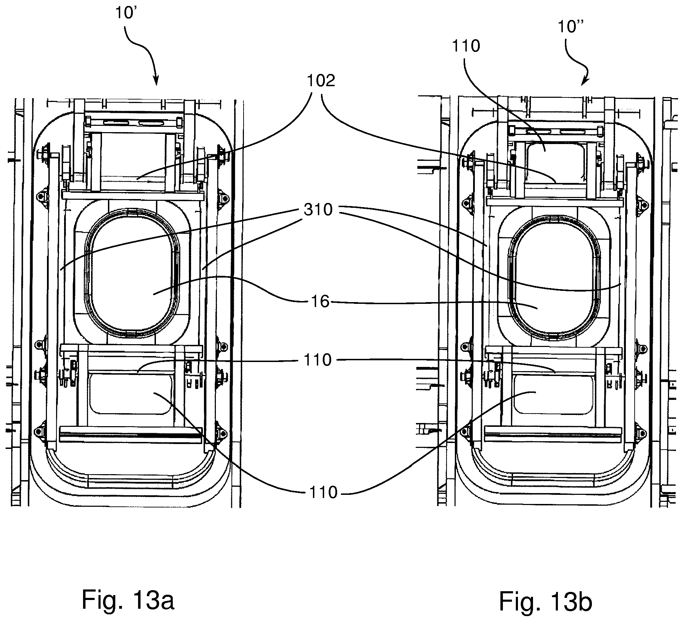

Un tel volet 110, déporté sous le hublot 16, est illustré par la vue frontale de porte de sortie d'urgence 10' de la figure 13a depuis l'intérieur de la cabine. Pour actionner l'ouverture du volet 110, des bielles de couplage 310 relient l'arbre principal 102 et l'arbre de blocage 120 du volet 110. En variante, en référence à la vue frontale de la porte 10" de la figure 13b, deux volets 110 peuvent être utilisées aux deux emplacements décrits ci-dessus en référence aux figures 1 ou 2, à savoir au-dessus et sous le hublot 16.

## Revendications

1. Porte de sortie d'urgence d'avion (10, 10') à mécanismes d'ouverture intégrés par regroupement, ce regroupement de mécanismes d'ouverture de la porte est réalisé dans un bandeau de regroupement (3) situé d'un côté d'un hublot (16) de dimension standard comportant une poignée interne (1) d'ouverture de porte montée sur un arbre principal (102) en liaison avec un arbre de verrouillage (8A) sur lequel est monté un mécanisme de blocage/verrouillage de porte à loquet (91) et verrou (81), au moins un mécanisme d'ouverture conditionnelle de la porte (100) comportant un volet d'évent (110) agencé dans la porte et présentant des bords inférieur (111) et supérieur (K4), une connexion à pivot (12) agencée dans la porte pour coupler le volet (110) à la poignée interne (1) et des ressorts de rappel (32) du volet (110) en position fermée pour permettre l'ouverture dudit volet (110) en exerçant une pression réduite sur le volet (110) dans des conditions de variation de pression résiduelle entre l'intérieur et l'extérieur de l'avion, un arbre de blocage (120) présente, à chaque extrémité, un levier de pression (121) équipé de premier et deuxième galets de blocage (122) et de déblocage (123) du volet (110) ainsi qu'une came de déblocage (41) fixée sur l'arbre principal (102), dans des conditions de variation résiduelle de pression entre l'intérieur et l'extérieur de l'avion, le volet d'évent (110) ainsi que l'arbre de blocage (120) qui est monté solidaire dudit volet, étant apte à pivoter autour de son bord inférieur (111) par rétractation des ressorts (32), permet à la came de déblocage (41) , en se déplaçant avec la poignée interne (1), d'engager le galet de déblocage (123) du volet (110) et de pousser ce galet de déblocage (123) de sorte à forcer la rotation de l'arbre de blocage (120) pour décoller le galet de blocage (122) d'une butée de porte (42) et libérer le volet d'évent (110), et, dans des conditions de surpression, les ressorts (32) étant calibrés pour ne pas faire pivoter le volet d'évent (110) autour de son bord inférieur (111) par actionnement de la poignée interne (1), ladite came de déblocage (41) n'engage pas le galet de déblocage (123) et le galet de blocage (122) vient au contact de la butée (42), empêchant ainsi l'ouverture dudit volet (110).

2. Porte de sortie d'urgence (10, 10') selon la revendication 1, **caractérisée en ce que** la butée (42) est fixée sur une ferrure de porte (10s), **en ce que**, dans les conditions de variation de pression résiduelle, les leviers de pression (121) et le volet (110) sont aptes à se déplacer conjointement par actionnement de la poignée interne (1) et permettre au volet (110) de s'ouvrir, et **en ce que**, dans les conditions de surpression, le volet (110), apte à pivoter autour de son bord supérieur jusqu'à prendre contact (F5, R1) avec l'arbre principal (102) actionné par la poignée (1), reste sur la porte (10, 10') et le galet de blocage (122) vient alors en contact de la butée (42) pour bloquer le volet (110) et empêcher le galet de déblocage (123) de se dégager de la came (41).

3. Porte de sortie d'urgence selon l'une quelconque des revendications 1 ou 2, dans laquelle un bouton de trappe (19) est aménagé sur une face externe (112) du volet d'évent (110) pour actionner une came d'ouverture (131), désengager les leviers de pression (121) et permettre ainsi l'ouverture de la porte à partir de l'extérieur de l'avion.

4. Porte de sortie d'urgence selon l'une quelconque des revendications précédentes, dans laquelle le mécanisme de blocage / verrouillage comporte un loquet de blocage (91) pour chaque verrou monté sensiblement contre une charnière (80) de pivotement et de maintien de la porte (10, 10') en position ouverte, un tel montage permettant de bloquer tout déplacement de la porte en azimut relatif de l'avion.

5. Porte de sortie d'urgence selon l'une quelconque des revendications précédentes, dans laquelle le mécanisme de blocage / verrouillage est formé d'un ensemble de loquet (91) et contre-loquet (92) de blocage combiné à chaque verrou (81), le contre-loquet (92) et le verrou (81) de chaque ensemble, montés sur un même arbre de verrouillage (8A), formant une seule pièce.

6. Porte de sortie d'urgence selon l'une quelconque des revendications précédentes, dans laquelle le loquet (91) est configuré pour envelopper le verrou (81) et le maintenir en place lorsque le mécanisme de verrouillage se rompt afin de conserver la porte dans un état sécuritaire.

7. Porte de sortie d'urgence selon l'une quelconque des revendications précédentes, dans laquelle le contre-loquet (92) est configuré pour former une avancée à l'intérieur du loquet (91), ce qui permet de réaliser une butée dès qu'une rupture du mécanisme de verrouillage se produit.

8. Porte de sortie d'urgence selon l'une quelconque des revendications précédentes, dans laquelle un mécanisme de rupture de glace (30, 31, 32) est également intégré dans le bandeau de regroupement des mécanismes (3), ce mécanisme de rupture de glace comporte à chaque extrémité du bandeau (3) une came (30) montée sur l'arbre principal 102, chaque came (30) étant guidée par une rampe de pivotement (31) en liaison avec un ressort de rappel (33), pour générer par l'actionnement de l'arbre de verrouillage par la poignée interne une séquence d'ouverture de porte d'amplitude minimale vers l'intérieur de la cabine passagers et briser une épaisseur de glace déterminée.

9. Porte de sortie d'urgence selon l'une quelconque des revendications précédentes, **caractérisée en ce que** le bandeau (3) de regroupement des mécanismes d'ouverture de porte s'étend horizontalement au-dessus du hublot (16), la porte (10, 10') étant apte à s'ouvrir par pivotement selon un axe horizontal (X'X) coïncidant sensiblement avec un bord supérieur de la porte d'urgence (10, 10'), et le volet (110) disposé au niveau du bandeau et/ou déporté sous le hublot (16) en liaison avec des bielles de couplage (301) reliant l'arbre principal (102) et l'arbre de blocage (120) du volet (110).

10. Procédé d'ouverture/fermeture d'une porte de sortie d'urgence d'avion selon l'une quelconque des revendications précédentes, cette porte (10, 10') étant située sur aile d'avion pour permettre une évacuation de la cabine passagers, la cinématique de fermeture de la porte (10, 10') reprenant les étapes d'ouverture ci-dessous en ordre inverse, ce procédé est **caractérisé en ce qu'**il consiste à effectuer une cinématique d'ouverture de porte agencée dans un encadrement du fuselage de l'avion, à partir d'un état initial de porte en position fermée de profil aligné avec le fuselage, selon la suite d'étapes suivantes générées successivement par une unique action exercée sur une poignée interne (1) dans une unique séquence de pivotement autour d'un arbre principal (102):
- une première étape d'ouverture d'un volet d'évent (110) du mécanisme d'ouverture conditionnelle (100) lorsque une variation de pression entre la cabine et l'extérieur de l'avion est inférieure à une valeur résiduelle déterminée;
- une étape de déblocage/déverrouillage par activation d'un mouvement des loquets (91) pour débloquer les verrous (81) et rétracter ces verrous débloqués afin de finaliser le déverrouillage en libérant l'arbre principal (102);
- une étape d'ouverture de porte par rotation de l'arbre principal (102) entraînant un mouvement de basculement de la porte (10,10') vers l'intérieur de la cabine;
- une étape de translation sensiblement parallèlement au fuselage en liaison avec un guidage dans l'encadrement de porte (200) et un contournement des butées de fuselage (220), et
- une étape de pivotement de la porte (10, 10') entraînée autour d'un axe de rotation (X'X) des charnières (80) et aidée dans cette rotation par des actionneurs (18) agencés latéralement.

11. Procédé d'ouverture selon la revendication précédente, dans lequel une condition de surpression entre l'intérieur et l'extérieur de l'avion, supérieure à une valeur seuil donnée, bloque le mécanisme d'ouverture conditionnelle (100) au cours de sa mise en œuvre pour empêcher l'ouverture du volet d'évent (110) lors de la première étape.

12. Procédé d'ouverture selon l'une quelconque des revendications 10 ou 11, dans lequel une étape préliminaire d'ouverture de la porte (10, 10') vers l'intérieur de la cabine avec une amplitude minimale est générée par une amorce de rotation de cames de rupture (30) montées sur l'arbre principal (102) en liaison avec une rampe de guidage (31) couplé à un ressort de rappel (32), cette étape étant réalisée après l'étape d'ouverture du volet d'évent et avant l'étape de déblocage / déverrouillage.

13. Procédé d'ouverture selon l'une quelconque des revendications 10 à 12, dans lequel l'amorce de rotation préliminaire, destinée à la rupture de la glace, est effectuée par un aller-retour de rotation / contre-rotation suivant une configuration adaptée des cames de rupture (30).

## Patentansprüche

1. Flugzeugnotausgangstür (10, 10') mit durch Gruppierung integrierten Öffnungsmechanismen, wobei diese Gruppierung von Öffnungsmechanismen der Tür in einer Gruppierungsleiste (3) ausgeführt ist, die sich auf einer Seite einer Luke (16) mit Standardabmessungen befindet, umfassend einen Innengriff (1) zum Öffnen der Tür, der an einer Hauptwelle (102) montiert ist, die mit einer Verriegelungswelle (8A) in Verbindung steht, an der ein Türsperr-/Türverriegelungsmechanismus mit Klinke (91) und Riegel (81) montiert ist, zumindest einen Mechanismus (100) zur bedingten Türöffnung mit einer Lüftungsklappe (110), die in der Tür angeordnet ist und eine Unterkante (111) und eine Oberkante (K4) aufweist, einer Schwenkverbindung (12), die in der Tür angeordnet ist, um die Klappe (110) mit dem Innengriff (1) zu koppeln, und Federn (32) zum Zurückstellen der Klappe (110) in die geschlossene Position, um die Öffnung der Klappe (110) durch Ausüben eines reduzierten Drucks auf die Klappe (110) unter Bedingungen einer Restdruckänderung zwischen dem Flugzeuginneren und -äußeren zu ermöglichen, eine Sperrwelle (120) mit einem Druckhebel (121) an jedem Ende, der mit einer ersten und einer zweiten Rolle zum Sperren (122) bzw. Entsperren (123) der Klappe (110) ausgestattet ist, sowie einem Entsperrnocken (41), der an der Hauptwelle (102) befestigt ist, wobei unter Bedingungen einer Restdruckänderung zwischen dem Flugzeuginneren und
- äußeren die Lüftungsklappe (110) sowie die fest mit der Klappe verbundene Sperrwelle (120), die in der Lage sind, sich durch Zurückziehen der Federn (32) um ihre Unterkante (111) zu drehen, es ermöglichen, dass sich der Entsperrnocken (41) mit dem Innengriff (1) bewegt und mit der Entsperrrolle (123) der Klappe (110) in Eingriff kommt und diese Entsperrrolle (123) so drückt, dass die Drehung der Sperrwelle (120) erzwungen wird, um die Sperrrolle (122) von einem Türanschlag (42) zu lösen und die Lüftungsklappe (110) freizugeben, und wobei unter Überdruckbedingungen die Federn (32) so kalibriert sind, dass sie bewirken, dass sich die Lüftungsklappe (110) durch Betätigung des Innengriffs (1) nicht um ihre Unterkante (111) dreht, der Entsperrnocken (41) nicht mit der Entsperrrolle (123) in Eingriff kommt und die Sperrrolle (122) mit dem Anschlag (42) in Kontakt kommt, wodurch das Öffnen der Klappe (110) verhindert wird.

2. Notausgangstür (10, 10') nach Anspruch 1, **dadurch gekennzeichnet, dass** der Anschlag (42) an einem Türbeschlag (10s) befestigt ist, dass unter Bedingungen einer Restdruckänderung die Druckhebel (121) und die Klappe (110) in der Lage sind, sich durch Betätigung des Innengriffs (1) gemeinsam zu bewegen und das Öffnen der Klappe (110) zu ermöglichen, und dass unter Überdruckbedingungen die Klappe (110), die in der Lage ist, sich um ihre Oberkante zu drehen, bis sie mit der durch den Griff (1) betätigten Hauptwelle (102) in Kontakt (F5, R1) kommt, an der Tür (10, 10') bleibt und die Sperrrolle (122) mit dem Anschlag (42) in Kontakt kommt, um die Klappe (110) zu sperren und zu verhindern, dass sich die Entsperrrolle (123) vom Nocken (41) löst.

3. Notausgangstür nach einem der Ansprüche 1 oder 2, wobei an einer Außenfläche (112) der Lüftungsklappe (110) ein Klappenknopf (19) vorgesehen ist, um einen Öffnungsnocken (131) zu betätigen, die Druckhebel (121) außer Eingriff zu bringen und so die Öffnung der Tür von außerhalb des Flugzeugs zu ermöglichen.

4. Notausgangstür nach einem der vorangehenden Ansprüche, wobei der Sperr-/Verriegelungsmechanismus eine Sperrklinke (91) für jeden Riegel umfasst, die im Wesentlichen an einem Scharnier (80) zum Schwenken und Halten der Tür (10, 10') in der offenen Position montiert ist, wobei eine solche Montage es ermöglicht, dass jede Bewegung der Tür in einem relativen Azimut zum Flugzeug gesperrt wird.

5. Notausgangstür nach einem der vorangehenden Ansprüche, wobei der Sperr-/Verriegelungsmechanismus aus einer Baugruppe aus Sperrklinke (91) und Gegensperrklinke (92) ausgebildet ist, der mit jedem Riegel (81) kombiniert ist, wobei die Gegenklinke (92) und der Riegel (81) jeder Baugruppe, die auf derselben Verriegelungswelle (8A) montiert sind, ein einziges Teil ausbilden.

6. Notausgangstür nach einem der vorangehenden Ansprüche, wobei die Klinke (91) so konfiguriert ist, dass sie den Riegel (81) umschließt und in Position hält, wenn der Verriegelungsmechanismus bricht, um die Tür in einem sicheren Zustand zu halten.

7. Notausgangstür nach einem der vorangehenden Ansprüche, wobei die Gegenklinke (92) so konfiguriert ist, dass sie einen Vorsprung innerhalb der Klinke (91) ausbildet, wodurch ein Anschlag bereitgestellt wird, sobald ein Bruch des Verriegelungsmechanismus auftritt.

8. Notausgangstür nach einem der vorangehenden Ansprüche, wobei in die Mechanismengruppierungsleiste (3) auch ein Glasbruchmechanismus (30, 31, 32) integriert ist, wobei dieser Glasbruchmechanismus an jedem Ende der Leiste (3) einen Nocken (30) umfasst, der auf der Hauptwelle (102) montiert ist, wobei jeder Nocken (30) durch eine Schwenkrampe (31) in Verbindung mit einer Rückstellfeder (33) geführt wird, um durch die Betätigung der Verriegelungswelle durch den Innengriff eine Türöffnungssequenz mit minimaler Amplitude in Richtung des Passagierkabineninneren zu ermöglichen und eine bestimmte Glasdicke zu durchbrechen.

9. Notausgangstür nach einem der vorangehenden Ansprüche, **dadurch gekennzeichnet, dass** sich die Leiste (3) zur Gruppierung der Türöffnungsmechanismen horizontal über der Luke (16) erstreckt, wobei sich die Tür (10, 10') durch Schwenken um eine horizontale Achse (X'X), die im Wesentlichen mit einer Oberkante der Nottür (10, 10') zusammenfällt, öffnen kann und wobei die Klappe (110) in Verbindung mit Kopplungsstangen (301), die die Hauptwelle (102) und die Sperrwelle (120) der Klappe (110) verbinden, auf Höhe der Leiste und/oder versetzt unter der Luke (16) angeordnet ist.

10. Verfahren zum Öffnen/Schließen einer Flugzeugnotausgangstür nach einem der vorangehenden Ansprüche, wobei diese Tür (10, 10') an einem Flugzeugflügel angeordnet ist, um eine Evakuierung der Passagierkabine zu ermöglichen, wobei die Kinematik zum Schließen der Tür (10, 10') die nachstehenden Öffnungsschritte in umgekehrter Reihenfolge wiederholt, wobei das Verfahren **dadurch gekennzeichnet ist, dass** es darin besteht, eine Kinematik zum Öffnen einer in einem Rahmen des Flugzeugrumpfs angeordneten Tür ausgehend von einem Ausgangszustand der Tür in geschlossener Position mit einem mit dem Rumpf ausgerichteten Profil gemäß der folgenden Abfolge von Schritten auszuführen, die nacheinander durch eine einzige Einwirkung, die auf einen Innengriff (1) in einer einzigen Schwenksequenz um eine Hauptwelle (102) ausgeübt wird, erzeugt werden:
- einen ersten Schritt des Öffnens einer Lüftungsklappe (110) des Mechanismus (100) zur bedingten Öffnung, wenn eine Druckänderung zwischen der Kabine und dem Äußeren des Flugzeugs geringer als ein bestimmter Restwert ist;
- einen Schritt des Entsperrens/Entriegelns durch Aktivieren einer Bewegung der Klinken (91) zum Entsperren der Riegel (81) und Zurückziehen dieser entsperrten Riegel, um die Entsperrung durch Freigeben der Hauptwelle (102) abzuschließen;
- einen Schritt des Öffnens der Tür durch Drehung der Hauptwelle (102), die eine Kippbewegung der Tür (10, 10') in Richtung des Kabineninneren bewirkt;
- einen Schritt der Translation im Wesentlichen parallel zum Rumpf in Verbindung mit einer Führung im Türrahmen (200) und einer Umgehung der Rumpfanschläge (220) und
- einen Schritt des Schwenkens der Tür (10, 10'), die um eine Drehachse (X'X) der Scharniere (80) angetrieben und bei dieser Drehung durch seitlich angeordnete Stellglieder (18) unterstützt wird.

11. Öffnungsverfahren nach dem vorangehenden Anspruch, wobei ein Überdruckzustand zwischen dem Inneren und dem Äußeren des Flugzeugs, der größer als ein gegebener Schwellenwert ist, den Mechanismus (100) zur bedingten Öffnung während seines Betriebs sperrt, um die Öffnung der Lüftungsklappe (110) im ersten Schritt zu verhindern.

12. Öffnungsverfahren nach einem der Ansprüche 10 oder 11, wobei ein vorbereitender Schritt der Öffnung der Tür (10, 10') in Richtung des Kabineninneren mit einer minimalen Amplitude durch Einleitung einer Drehung von Brechernocken (30) erzeugt wird, die auf der Hauptwelle (102) in Verbindung mit einer Führungsrampe (31) montiert sind, die mit einer Rückstellfeder (32) gekoppelt ist, wobei dieser Schritt nach dem Schritt des Öffnens der Lüftungsklappe und vor dem Schritt des Entsperrens/Entriegelns ausgeführt wird.

13. Öffnungsverfahren nach einem der Ansprüche 10 bis 12, wobei die Einleitung der vorbereitenden Drehung, die dazu bestimmt ist, das Glas zu brechen, durch eine Hin- und Herdrehung/-gegendrehung gemäß einer geeigneten Konfiguration der Brechernocken (30) erfolgt.

## Claims

1. Aircraft emergency exit door (10, 10') with opening mechanisms which are integrated by grouping, this grouping of door opening mechanisms is carried out in a grouping strip (3) situated on a side of a window (16) with standard dimensions comprising a door opening inner handle (1) fitted on a main shaft (102) in connection with a locking shaft (8A) on which there is fitted a mechanism for blocking/locking the door with a latch (91) and lock (81), at least one mechanism for conditional opening of the door (100) comprising a vent flap (110) arranged in the door and having a lower edge (111) and an upper edge (K4), a pivot connection (12) arranged in the door in order to couple the flap (110) to the inner handle (1) and return springs (32) for the flap (110) to a closed position, in order to allow opening of said flap (110) by exerting a reduced pressure on the flap (110) in residual pressure variation conditions between the inside and outside of the aircraft, a blocking shaft (120) has at each end a pressure lever (121) equipped with a first and a second roller for blocking (122) and unblocking (123) of the flap (110), and an unblocking cam (41) secured on the main shaft (102), in residual pressure variation conditions between the inside and outside of the aircraft, the vent flap (110), and the blocking shaft (120) which is mounted secured to said flap, being able to pivot about its lower edge (111) by retraction of the springs (32), allows the unblocking cam (41), by being displaced together with the inner handle (1), to engage the roller (123) for unblocking of the flap (110) and to push this unblocking roller (123) so as to force the rotation of the blocking shaft (120) in order to detach the blocking roller (122) from a door stop (42) and release the vent flap (110), and, in excess pressure conditions, the springs (32) being calibrated in order not to cause the vent flap (110) to pivot about its lower edge (111) by actuation of the inner handle (1), said unblocking cam (41) does not engage the unblocking roller (123) and the blocking roller (122) comes into contact with the stop (42), thus preventing the opening of said flap (110).

2. Emergency exit door (10, 10') according to Claim 1, **characterized in that** the stop (42) is secured on a door mounting (10s), **in that**, in residual pressure variation conditions, the pressure levers (121) and the flap (110) can be displaced jointly by actuation of the inner handle (1), and allow the flap (110) to open, and **in that**, in excess pressure conditions, the flap (110), which is able to pivot about its upper edge until it comes into contact (F5, R1) with the main shaft (102) actuated by the handle (1), remains on the door (10, 10') and the blocking roller (122) then comes into contact with the stop (42) in order to block the flap (110) and prevent the unblocking roller (123) from disengaging from the cam (41).

3. Emergency exit door according to either one of Claims 1 and 2, wherein an exit opening button (19) is provided on an outer face (112) of the vent flap (110), in order to actuate an opening cam (131), disengage the pressure levers (121) and thus permit opening of the door from the outside of the aircraft.

4. Emergency exit door according to any one of the preceding claims, wherein the blocking/locking mechanism comprises a blocking latch (91) for each lock fitted substantially against a hinge (80) for pivoting and retention of the door (10, 10') in the open position, with fitting of this type making it possible to block any displacement of the door in aircraft relative azimuth.

5. Emergency exit door according to any one of the preceding claims, wherein the blocking/locking mechanism is formed by a latch (91) and counter-latch (92) blocking assembly combined with each lock (81), with the counter-latch (92) and the lock (81) of each assembly, which are fitted on the same locking shaft (8A), forming a single part.

6. Emergency exit door according to any one of the preceding claims, wherein the latch (91) is configured to envelop the lock (81) and retain it in place when the locking mechanism breaks, in order to keep the door in a secure state.

7. Emergency exit door according to any one of the preceding claims, wherein the counter-latch (92) is configured to form a protuberance inside the latch (91), which makes it possible to create a stop when breakage of the locking mechanism takes place.

8. Emergency exit door according to any one of the preceding claims, wherein an ice breakage mechanism (30, 31, 32) is also integrated in the mechanism grouping strip (3), this ice breakage mechanism comprising at each end of the strip (3) a cam (30) which is fitted on the main shaft (102), each cam (30) being guided by a pivoting ramp (31) in connection with a return spring (33), in order, by means of the actuation of the locking shaft by the inner handle, to generate a sequence for opening the door with a minimal amplitude towards the inside of the passenger cabin, and to break a specific thickness of ice.

9. Emergency exit door according to any one of the preceding claims, **characterized in that** the door opening mechanism grouping strip (3) extends horizontally above the window (16), with the door (10, 10') being able to open by pivoting about a horizontal axis (X'X) which coincides substantially with an upper edge of the emergency door (10, 10'), and the flap (110) is positioned at the strip, and/or is offset below the window (16), in connection with coupling connecting rods (301) which connect the main shaft (102) and the shaft (120) for blocking of the flap (110).

10. Method for opening/closure of an aircraft emergency exit door according to any one of the preceding claims, this door (10, 10') being situated over the aircraft wing, in order to permit evacuation of the passenger cabin, with the closure kinematics of the door (10, 10') repeating the below opening steps in inverse order, this method being **characterized in that** it consists of implementing opening kinematics for a door which is arranged in a framework of the aircraft fuselage, starting from an initial state in which the door is in the closed position with its profile aligned with the fuselage, according to the following series of steps generated in succession by a single action exerted on an inner handle (1) in a single pivoting sequence around a main shaft (102):
- a first step of opening of a vent flap (110) of the conditional opening mechanism (100), when a pressure variation between the cabin and the outside of the aircraft is lower than a specific residual value;
- a step of unblocking/unlocking by actuation of a movement of the latches (91) in order to unblock the locks (81) and retract these unblocked locks so as to finalize the unlocking by releasing the main shaft (102);
- a step of opening of the door by rotation of the main shaft (102), giving rise to a movement of tilting of the door (10, 10') towards the inside of the cabin;
- a step of translation substantially parallel to the fuselage, in connection with guiding in the door framework (200) and bypassing of the fuselage stops (220); and
- a step of pivoting of the door (10, 10') entrained around an axis of rotation (X'X) of the hinges (80), and assisted in this rotation by actuators (18) which are arranged laterally.

11. Opening method according to the preceding claim, wherein a condition of excess pressure between the inside and the outside of the aircraft, higher than a given threshold value, blocks the conditional opening mechanism (100) during its implementation, in order to prevent the opening of the vent flap (110) during the first step.

12. Opening method according to either one of Claims 10 and 11, wherein a preliminary step of opening of the door (10, 10') towards the inside of the cabin with minimal amplitude is generated by initiation of rotation of breakage cams (30) which are fitted on the main shaft (102), in connection with a guide ramp (31) coupled to a return spring (32), this step being carried out after the step of opening of the vent flap and before the step of unblocking/unlocking.

13. Opening method according to any one of Claims 10 to 12, wherein the initiation of preliminary rotation, which is designed to break the ice, is carried out by a to-and-fro rotation/counter-rotation according to an appropriate configuration of the breakage cams (30).
